# EUROPÄISCHE PATENTSCHRIFT

(11) **EP 1 402 987 B1**
(45) Veröffentlichungstag und Bekanntmachung des Hinweises auf die Patenterteilung: **14.11.2007**
(21) Anmeldenummer: 03021712.9
(22) Anmeldetag: 25.09.2003
(51) Int. Cl.: B23K 26/08

(54) **Verfahren zur Überwachung einer eine Energiequelle führenden Vorrichtung wie Handhabungsgerät**
Process for monitoring an energy source guiding device as a manipulator
Procédé de surveillance d'un dispositif de guidage de source d'énergie tel qu'un manipulateur

(30) Priorität: 26.09.2002 DE 10245188
(43) Veröffentlichungstag der Anmeldung: 31.03.2004
(73) Patentinhaber: Reis GmbH & Co. Maschinenfabrik Obernburg, 63785 Obernburg (DE); Elan Schaltelemente GmbH & Co. KG, 35435 Wettenberg (DE)
(72) Erfinder: Kroth, Eberhard, Dr., 63785 Obernburg (DE)
(74) Vertreter: Stoffregen, Hans-Herbert

(56) Entgegenhaltungen:
- EP-A- 0 428 748
- DE-A1- 10 040 920
- DE-A1- 19 839 482

## Beschreibung

Die Erfindung bezieht sich auf ein Verfahren zur Überwachung einer eine Energiequelle führenden Vorrichtung wie Handhabungsgerät zum Applizieren von Energie auf ein Werkstück, das mit der Energiequelle in einem von einer Schutzraumwandung umgebenen Schutzraum angeordnet ist, wobei die Energiequelle mit einer Geschwindigkeit V bewegt und die Geschwindigkeit V der bewegten Energiequelle als aktuelle Geschwindigkeit Vₐₖₜ erfasst wird. Die Gattung ist der DE-A-198 39 482 zu entnehmen.

Handhabungsgeräte zur Führung von Energiequellen in Form von Laserquellen zur Bearbeitung von Werkstücken sind nach dem Stand der Technik in einer Laserschutzkabine angeordnet, um eine Gefährdung von Personal und benachbarten technischen Anlagen durch Laserstrahlen auszuschließen.

Es kann jedoch der Fehlerfall eintreten, dass ein von einem Handhabungsgerät geführter Laser den Laserstrahl punktförmig oder mit sehr geringer Geschwindigkeit auf eine Außenwand der Laserschutzkabine richtet, so dass die Außenwand durch Einbringung von Energie zerstört werden könnte. Das austretende Laserlicht kann dann zu einer Gefährdung von Personen und Gegenständen führen.

Aus diesem Grund ist bereits vorgesehen, dass die Wände von Laserschutzkabinen entweder aktiv messend oder mehrschalig oder mit ausreichend dicken Wandstärken ausgeführt werden, was jedoch sehr kostenintensiv ist.

Auch ist es bekannt, mittels eines Roboters eine Gasflamme entlang eines Kunststoffbauteils zu führen, um Materialeigenschaften zu ändern. Dabei muss sichergestellt werden, dass das Bauteil nicht zu brennen beginnt.

Als Überwachungsverfahren nach dem Stand der Technik wird des Weiteren vorgeschlagen, dass das Handhabungsgerät in festen Zeitabständen einen vorzugsweise zweikanalig ausgeführten Uberwachungsschalter betätigt, um eine indirekte Überwachung der Bewegungssteuerung des Handhabungsgerätes zu ermöglichen. Dabei wird die Anlage abgeschaltet, sofern der Ubenvachungsschalter innerhalb eines fest eingestellten Zeitfensters nicht betätigt wird. Dies bedeutet, dass im Fehlerfall spätestens nach der eingestellten Überwachungszeit die Anlage einschließlich der Laserleistung abgeschaltet wird. Dadurch wird sichergestellt, dass nur eine begrenzte Energiemenge aus der Laserquelle an einen Punkt, beispielsweise an der Wand der Laserschutzkabine eingebracht werden kann.

Um einen laufenden Produktionszyklus der Vorrichtung durch das Anfahren des Uberwachungsschalters nicht unterbrechen zu müssen ist es erforderlich, dass die Uberwachungszeit so eingestellt wird, dass sie länger als der Produktionszyklus im ungünstigsten Fall ist. Die Zykluszeiten zur Bearbeitung eines Teiles in einer Laserschutzkabine können jedoch durchaus im Bereich von 30 sec bis 90 sec liegen. Die hieraus resultierenden Energiemengen, die der Laserstrahl im Fehlerfall dann an einem Ort einbringen würde, sind bereits so hoch, dass ganz erhebliche Wandstärken für die Laserschutzkabine erforderlich werden, um mit ausreichender Sicherheit ein Durchbrechen der Kabinenwand zu vermeiden. Aus diesem Grund sind diese alternativen Verfahren nur bedingt bzw. nur mit erheblichem Aufwand für die Laserschutzkabine nutzbar.

Aus der DE 100 40 920 A1 ist eine Prozesssteuerung zur Materialbearbeitung mittels Laser bekannt. Damit ein insbesondere handgeführter Bearbeitungskopf selbsttätig auf sich ändernde Prozessparameter reagiert, ohne dass motorisch angetriebene Achsen für ein Verfahren auf einem Werkstück zwingend notwendig sind, ist eine Geschwindigkeits-Leistungssteuerung im Bearbeitungskopf vorgesehen, wodurch die von dem Laser abgegebene Leistung auf die Geschwindigkeit des Bearbeitungskopfes abgestimmt wird.

Aus der EP 0 743 130 A1 ist eine Steuerung eines Laserstrahls zur Bearbeitung eines Werkstücks bekannt.

Davon ausgehend liegt der vorliegenden Erfindung das Problem zu Grunde, ein Verfahren der zuvor genannten Art dahingehend weiterzubilden, dass die Energiequelle zu einem Werkstück bewegt werden kann, ohne dass unzulässige Erwärmungen insbesondere im Bereich der Umgebung des Werkstücks auftreten bzw. das Werkstück umgebene Wandung des Schutzraums unnötig stark dimensioniert sein muss.

Das Problem wird erfindungsgemäß im Wesentlichen dadurch gelöst, dass eine minimale Geschwindigkeit Vₘᵢₙ in Abhängigkeit von von der Energiequelle abgegebener Leistung und/oder zumindest einem charakteristischen Parameter von der Schutzraum umgebenden Schutzraumwandung bestimmt oder vorgegeben wird, dass die aktuelle Geschwindigkeit Vₐₖₜ der Energiequelle mit der minimalen Geschwindigkeit Vₘᵢₙ verglichen wird und dass bei Unterschreiten der minimalen Geschwindigkeit Vₘᵢₙ die bei Vₐₖₜ > Vₘᵢₙ mit konstanter Leistung oder nahezu konstanter Leistung betriebene Energiequelle unmittelbar oder nach Ablauf eines Unterschreitungszeitraums abgeschaltet wird.

Der Erfindung liegt der Gedanke zu Grunde zu vermeiden, dass eine Minimalgeschwindigkeit der an dem Handhabungsgerät angeordneten Energiequelle unterschritten wird, so dass die Energie, die auf einer bestimmten Wegstrecke oder in einem Punkt eingebracht wird, indirekt überwacht werden kann. Es ist vorgesehen, dass die aktuelle Geschwindigkeit der Energiequelle erfasst und mit einer Minimalgeschwindigkeit verglichen wird und eine Abschaltung dann erfolgt, wenn die vorgegebene Minimalgeschwindigkeit kurzfristig oder für einen bestimmten Zeitraum unterschritten wird. Dadurch wird sichergestellt, dass eine von der Energiequelle ausgehende Energiemenge je Wegeinheit einen bestimmten Wert nicht überschreitet.

Durch die zeitliche und/oder örtliche Begrenzung der eingebrachten Energiemenge sind besondere Vorkehrungen betreffend aktiv messende oder mehrschalig oder mit ausreichend dicken Wandstärken ausgeführte Schutzkabinen nicht mehr erforderlich, da die Wandstärken in Abhängigkeit von den Parametern Minimalgeschwindigkeit und Leistung der Energiequelle erheblich dünner dimensioniert werden können, als bei herkömmlichen Überwachungsverfahren. Dabei kann auch ein charakteristischer Parameter der Schutzraumwandung wie Wandstärke oder Material der Wandung oder Abstand zwischen zu bearbeitendem Werkstück und Umwandung zur Bestimmung bzw. Festlegung der minimalen Geschwindigkeit herangezogen werden.

Nach einer bevorzugten Ausführungsform ist vorgesehen, dass die Minimalgeschwindigkeit in Abhängigkeit von der Leistung der Energiequelle, insbesondere Laserleistung einer Laserquelle als die Energiequelle eingestellt wird. Auch kann der zulässige Unterschreitungszeitraum in Abhängigkeit der Leistung und/oder der Ausführung einer Schutzkabine eingestellt werden.

Zur Überwachung der Geschwindigkeit der im Raum bewegbaren Energie- wie Laserquelle ist vorgesehen, dass Lage-Ist-Signale von Antriebseinheiten des Handhabungsgerätes erfasst werden, dass aus den Lage-Ist-Signalen durch eine Transformationsoperation kartesische Koordinaten der Energiequelle berechnet werden und dass die berechneten kartesischen Koordinaten mit eingespeicherten Werten und/oder Wertebereichen verglichen werden, um ein Signal zum Stillsetzen des Handhabungsgerätes und zum Abschalten der Energiequelle zu erzeugen, wenn die transformierten kartesischen Koordinaten den Wert und/oder Wertebereich verlassen.

In einer bevorzugten Verfahrensweise wird ein Differenzvektor durch Subtraktion eines ersten kartesischen Koordinatensatzes in einem ersten Abtastzeitpunkt von einem zweiten kartesischen Koordinatensatz in einem zweiten Abtastzeitpunkt errechnet, wobei eine kartesische Geschwindigkeit der Energiequelle über eine Zeitdifferenz in dem ersten und zweiten Abtastzeitpunkt ermittelt wird und wobei ein Signal zum ungesteuerten Stillsetzen von Antriebseinheiten und/oder der Energiequelle dann erzeugt wird, wenn die errechnete Geschwindigkeit eine vorgegebene minimale Geschwindigkeit unterschreitet. Die Überwachung der Geschwindigkeit erfolgt dabei vorzugsweise zyklisch.

Im Falle einer Laserquelle als die Energiequelle liegt in Abhängigkeit von der Laserleistung im Bereich von 100 bis 500 Watt, vorzugsweise 300 Watt die minimale Geschwindigkeit Vₘᵢₙ im Bereich von 5 mm/sec = Vₘᵢₙ= 20 mm/sec, vorzugsweise Vₘᵢₙ ^{~} 10 mm/sec.

Wird ein Werkstück grundsätzlich bei konstanter oder nahezu konstanter Energieabgabe der Energiequelle bearbeitet, so kann die Energie von Werkstück zu Werkstück oder auf unterschiedliche Werkstückbereiche, die zu bearbeiten sind, individuell eingestellt werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von den Figuren zu entnehmenden Ausführungsbeispielen.

Es zeigen:
- Fig. 1: eine schematische Darstellung einer technischen Anlage umfassend ein in einem Laserschutzraum angeordnetes Handhabungsgerät zur Führung einer Energiequelle und
- Fig. 2: ein Steuerungssystem zur Steuerung der technischen Anlage.

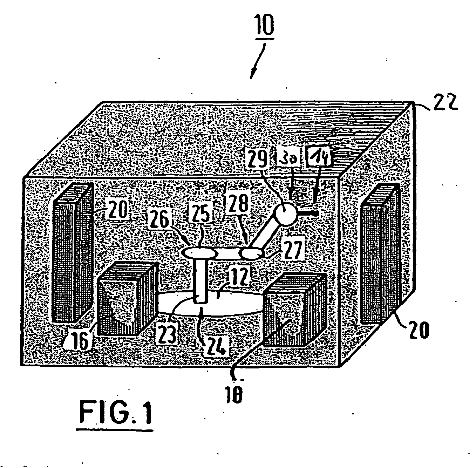

In Fig. 1 ist schematisch eine technische Anlage 10 mit erhöhten Sicherheitsanforderungen dargestellt. In dem beschriebenen Ausführungsbeispiel besteht die technische Anlage 10 aus einem Handhabungsgerät 12 zur Führung einer Energiequelle 14 zur Bearbeitung bzw. Beeinflussung von Werkstücken 16, 18 mit Energie wie Laserstrahlen oder Wärme von z. B. einer Gasflamme. Die Werkstücke 16, 18 sind über zugeordnete Schutztüren 20 bestückbar und zusammen mit dem Handhabungsgerät 12 innerhalb einer Sicherheitseinrichtung wie - Schutzkabine 22 angeordnet.

Das Handhabungsgerät 12 wird im Folgenden als Roboter 12 bezeichnet. Auch wird aus Gründen der Einfachheit nachstehend von Laserquelle als Energiequelle gesprochen, ohne die Erfindung einzuschränken.
Der Roboter 12 ist in dem hier beschriebenen Ausführungsbeispiel um vorzugsweise zumindest vier Achsen 23, 25, 27, 29 drehbar, wobei jeder Achse 23, 25, 27, 29 ein Aktor 24, 26, 28, 30 zugeordnet ist, der im Ausführungsbeispiel als Antriebseinheit 24, 26, 28, 30 bezeichnet ist.

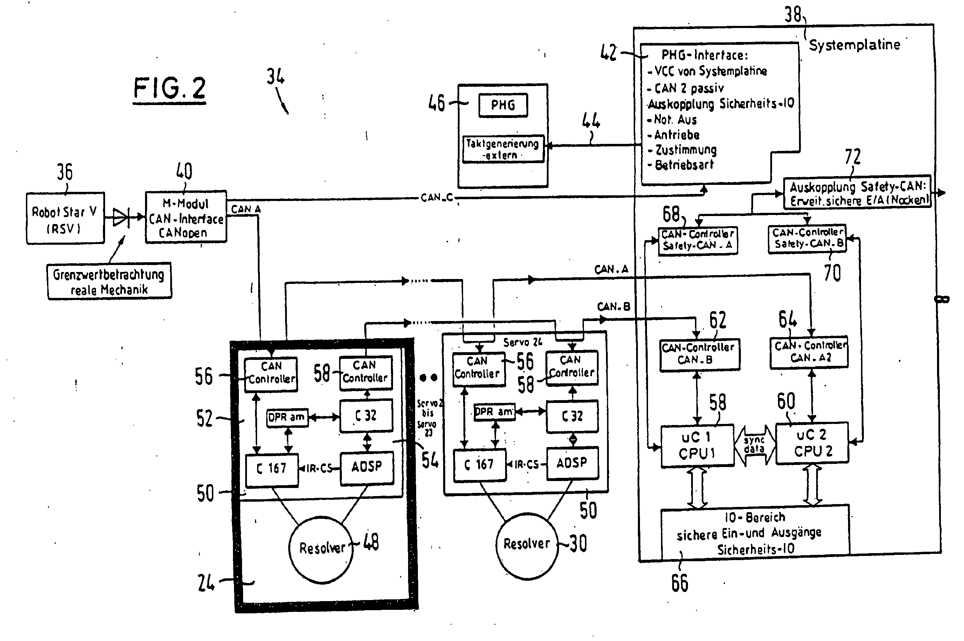

In Fig. 2 ist ein Steuerungssystem 34 dargestellt, bestehend aus einer zentralen und/oder dezentralen Steuereinheit wie Robotersteuerung 36, den Antriebseinheiten 24 bis 30 sowie einem Überwachungs- und Steuergerät 38, das im Folgenden Safety-Controller 38 genannt wird. Die Robotersteuerung 36 ist über ein Interface 40 mit einem Programmierhandgerät 46 und über eine Busleitung CAN_A mit den Antriebseinheiten 24 - 30 und dem Safety-Controller 38 nach Art eines Strangs verbunden. Ferner ist der Safety-Controller 38 über eine Verbindungsleitung 44 mit dem Programmierhandgerät 46 verbunden. Das Programmierhandgerät 46 kann auch zur Programmierung der Robotersteuerung 36 verwendet werden, wozu das Interface 42 des Safety-Controllers 38 über eine Busleitung CAN_C und das CAN-Interface 40 mit der Robotersteuerung 36 verbunden ist.

Die Antriebseinheiten 24 - 30 weisen einen gleichen Aufbau auf, der am Beispiel der Antriebseinheit 24 beschrieben werden soll. Zur Erfassung von Lage-Istwert-Signalen weist die Antriebseinheit 24 einen Resolver 48 auf, der mit einer redundant aufgebauten Antriebssteuerung 50 verbunden ist. Die Antriebssteuerung 50 weist zwei Kanäle bzw. Kreise 52, 54 auf, wobei jeder Kanal einen eigenen CAN-Controller 56, 58 beinhaltet. Die CAN-Controller 56 sind untereinander über den betriebsmäßigen Bus CAN_A verbunden, der die Antriebssteuerung 50 einerseits mit der Robotersteuerung 36 und andererseits mit dem Safety-Controller 38 verbindet. Die CAN-Controller 58 sind untereinander über einen weiteren Bus CAN_B verbunden, der die Controller 58 mit dem Safety-Controller 38 verbindet. Die Antriebseinheit 24 umfasst des Weiteren einen Motor, ein Leistungsteil, gegebenenfalls ein Getriebe und eine Bremseinheit (nicht dargestellt).

Der Safety-Controller 38 ist ebenfalls zweikanalig aufgebaut und weist in jedem Kanal einen eigenständigen Mikrocomputer 58, 60 auf. Die Mikrocomputer 58, 60 sind jeweils über einen CAN-Controller 62, 64 mit der Busleitung CAN_B oder der Busleitung CAN_A verbunden. Des Weiteren sind die Mikrocomputer 58, 60 mit einer Eingangs-/Ausgangsebene 66 verbunden, um sichere Ein- und Ausgänge zu schalten bzw. einzulesen. Sichere Ein- und Ausgänge der Ein-/Ausgangsebene 66 sind z. B. mit Kontakten der Schutztüren 20, 22 des Schutzraumes 14 verbunden. Zum weiteren Datenaustausch können die Mikrocomputer 58, 60 über weitere CAN-Controller 68, 70 und ein Interface 72 mit einem übergeordneten Sicherheitsbus gekoppelt werden.

Die Robotersteuerung 36 übernimmt die Aufgabe aller zentralen Regel- und Steuerungsaufgaben und unterliegt keinen sicherheitstechnischen Betrachtungsweisen. Insbesondere ist die Robotersteuerung 36 physisch unabhängig von dem Safety-Controller 38, so dass betriebsmäßige Abläufe in separaten Geräten ablaufen. Es ist vorgesehen, dass der Safety-Controller über die Eingangs-/Ausgangsebene 66 mit den Sensoren bzw. Schaltkontakten der Schutztüren 20, 22 und über die Busleitungen CAN_A und CAN_B mit den Aktoren bzw. Antriebseinheiten 24, 26, 28, 30 verbunden ist, um deren Zustände auszuwerten, zu verarbeiten und zu steuern. In Abhängigkeit der Zustände der Schaltkontakte der Schutztüren 20, 22 und/oder der Antriebseinheiten 24, 26, 28, 30 überträgt der Safety-Controller zumindest ein Freigabesignal an die Steuereinheit 36, so dass der Roboter 12 eine Aktion ausführen kann. Anschließend wird die Ausführung der zumindest einen Aktion durch den Safety-Controller fortlaufend überwacht. Im Fehlerfall wird zumindest ein weiteres Signal erzeugt, durch das die Anlage 10 in einen sicheren Zustand überführt wird.

Bei dem weiteren Signal handelt es sich vorzugsweise um eine "STOP - 1" -Funktion, d. h., dass durch das Signal ein gesteuertes Stillsetzen eingeleitet wird, wobei die Energiezufuhr zu den Antriebseinheiten beibehalten wird, um das Stillsetzen zu erzielen und die Energiezufuhr erst dann zu unterbrechen, wenn der Stillstand erreicht ist. Bei dem Signal kann es sich um ein solches der STOP-Kategorien 0 oder 2 bzw. um solche mit sicherheitsgerichteten STOP-Funktionen nach EN 60204 handeln.

In der Robotersteuerung 36 werden alle Lage-Sollwerte der jeweiligen Antriebseinheiten 24 - 30 berechnet und nacheinander über den Bus CAN_A zu den Antriebseinheiten 24 - 30 übertragen. Die Antriebseinheiten 24 - 30 übertragen jeweils einen Lage-Istwert an die Robotersteuerung über den Bus CAN_A zurück, woraufhin in der Robotersteuerung 36 Werte wie Schlupf-, Schleppabstand und andere berechnet werden können.

Zur Lage-Istwert-Erfassung ist der Resolver 48 vorgesehen, der direkt über eine Motorwelle mit dem Motor mechanisch gekoppelt ist. Am Ausgang des Resolvers 48 liegen analoge Istwert-Signale an, die in der Antriebssteuerung 50 digitalisiert werden. Der Resolver 48 liefert der Antriebssteuerung 50 Informationen, welche zum achsspezifischen Ausregeln von Prozessen dienen. Insbesondere wird durch die Antriebssteuerung 50 eine Stromregelung für das den Motor ansteuernde Leistungsteil erreicht. Die Istwert-Informationen werden jedoch nicht nur über den Bus CAN_A der Robotersteuerung 36, sondern auch über die Busleitungen CAN_A und CAN_B redundant dem Safety-Controller 38 übertragen, um dort überwacht zu werden.

Um ein Verfahren zur Überwachung der Geschwindigkeit des robotergeführten Lasers 14 zur Vermeidung von Sicherheitsrisiken in Verbindung mit der Laserschutzkabine bereitzustellen, ist eine Geschwindigkeitsüberwachung der von dem Roboter 12 bewegten Laserquelle 14 vorgesehen, um zu vermeiden, dass eine Minimalgeschwindigkeit unterschritten wird. Dadurch kann die Energie, die auf einer bestimmten Wegstrecke oder in einem Punkt beispielsweise an einer Außenwand der Laserschutzkabine 20 eingebracht wird, überwacht werden.

Dabei werden Lage-Istwert-Signale von den Antriebseinheiten 24 - 30 erfasst, wobei aus den Lage-Istwert-Signalen durch eine Transformationsoperation kartesische Koordinaten des gerätespezifischen Punktes, d. h. der Laserquelle 14 berechnet werden und wobei die berechneten kartesischen Koordinaten mit abgespeicherten Werten und/oder Wertebereichen verglichen werden, um ein Signal zum Stillsetzen der Anlage insbesondere der Laserquelle 14 zu erzeugen, wenn die transformierten kartesischen Koordinaten den Wert und/oder Wertebereich unterschreiten. Aus jeweils zwei transformierten Positionswerten wird durch Differenzieren eine kartesische Geschwindigkeit der Laserquelle errechnet und mit einer minimal erlaubten Geschwindigkeit verglichen. Bei Unterschreiten der erlaubten Minimalgeschwindigkeit wird sofort eine überwachte Funktion eingeleitet, wobei die Laserquelle 14 auf schnellstmögliche Weise abgeschaltet wird. Die Abschaltung erfolgt dann, wenn der vorgegebene Minimalwert kurzfristig oder für einen bestimmten Zeitraum (zulässiger Unterschreitungszeitraum) unterschritten wird, d. h., wenn die von der robotergeführten Laserquelle eingebrachte Energiemenge je Wegeinheit einen bestimmten Wert überschreiten würde.

Die Parameter der Überwachung wie beispielsweise Minimalschwelle sowie zulässiger Unterschreitungszeitraum können eingestellt werden. Diese Parameter sind von der Ausführung der Laserschutzkabine insbesondere der Blechdicke der Laserschutzkabinenwände und installierten Laserleistung der Laserquelle abhängig.

## Patentansprüche

1. Verfahren zur Überwachung einer eine Energiequelle (14) führenden Vorrichtung wie Handhabungsgerät (12) zum Applizieren von Energie auf ein Werkstück (16, 18), das mit der Energiequelle in einem von einer Schutzraumwandung umgebenen Schutzraum angeordnet ist, wobei die Energiequelle (14) mit einer Geschwindigkeit V bewegt und die Geschwindigkeit V der bewegten. Energiequelle als aktuelle Geschwindigkeit Vₐₖₜ erfasst wird,
**dadurch gekennzeichnet,**
**dass** eine minimale Geschwindigkeit Vₘᵢₙ in Abhängigkeit von von der Energiequelle (14) abgegebener Leistung und/oder zumindest einem charakteristischen Parameter von der Schutzraum umgebenden Schutzraumwandung bestimmt oder vorgegeben wird, dass die aktuelle Geschwindigkeit Vₐₖₜ der Energiequelle mit der minimalen Geschwindigkeit Vₘᵢₙ verglichen wird und dass bei Unterschreiten der minimalen Geschwindigkeit Vₘᵢₙ die bei Vₐₖₜ > Vₘᵢₙ mit konstanter Leistung oder nahezu konstanter Leistung betriebene Energiequelle unmittelbar oder nach Ablauf eines Unterschreitungszeitraums abgeschaltet wird.

2. Verfahren nach Anspruch 1,
**dadurch gekennzeichnet,**
**dass** als Energiequelle (14) insbesondere eine Laserquelle oder eine Wärmequelle wie Flamme verwendet wird.

3. Verfahren nach Anspruch 1,
**dadurch gekennzeichnet,**
**dass** der zulässige Unterschreitungszeitraum in Abhängigkeit des oder der Prozessparameter wie der Leistung und/oder der Ausführung einer Schutzraumwand eingestellt wird.

4. Verfahren nach Anspruch 1,
**dadurch gekennzeichnet,**
**dass** Lage-Istwert-Signale von Antriebseinheiten (24 - 30) erfasst werden, dass aus den Lage-Istwert-Signalen durch eine Transformationsoperation kartesische Koordinaten der Energiequelle (14) berechnet werden und dass die berechneten kartesischen Koordinaten mit abgespeicherten Werten und/oder Wertebereichen verglichen werden, um ein Signal zum Stillsetzen der Anlage (12) und/oder der Energiequelle (14) zu erzeugen, wenn die transformierten kartesischen Koordinaten den Wert und/oder Wertebereich verlassen.

5. Verfahren nach Anspruch 4,
**dadurch gekennzeichnet,**
**dass** ein Differenzvektor durch Subtraktion eines ersten kartesischen Koordinatensatzes in einem ersten Abtastzeitpunkt von einem zweiten kartesischen Koordinatensatz in einem zweiten Abtastzeitpunkt errechnet wird, dass eine kartesische Geschwindigkeit der Energiequelle (14) über eine Zeitdifferenz zwischen dem ersten und zweiten Abtastzeitpunkt ermittelt wird und dass ein Signal zum ungesteuerten Stillsetzen der Antriebseinheiten und/oder der Energiequelle (14) dann erzeugt wird, wenn die errechnete Geschwindigkeit eine vorgegebene minimale Geschwindigkeit Vₘᵢₙ unterschreitet.

6. Verfahren nach Anspruch 1,
**dadurch gekennzeichnet,**
**dass** eine Überwachung der Geschwindigkeit zyklisch erfolgt.

## Claims

1. Method for monitoring a device used to guide an energy source (14), such as a handling device (12), for applying energy to a work piece (16, 18), that is positioned with the energy source within a protective cabinet enclosed by a protective cabinet wall, whereby the energy source (14) is moved at a speed V and the speed V of the moved energy source is measured as current speed Vₐₖₜ,
**characterized in**
**that** a minimum speed Vₘᵢₙ, is determined or defined dependent upon the power emitted by the energy source (14) and/or at least one characteristic parameter of the protective wall that encloses the protective cabinet, that the current speed Vₐₖₜ of the energy source is compared with the minimum speed Vₘᵢₙ, and that when going below the minimum speed Vₘᵢₙ the energy source, which operates at Vₐₖₜ > Vₘᵢₙ at constant power or nearly constant power, is deactivated immediately or following expiration of a period of lower deviation.

2. Method according to claim 1,
**characterized in**
**that** especially a laser source or a heat source such as a flame is used as the energy source (14).

3. Method according to claim 1,
**characterized in**
**that** the permissible lower deviation is adjusted dependent on the process parameter or parameters such as the output and/or the construction of a protective cabinet wall.

4. Method according to claim 1,
**characterized in**
**that** the actual position value signals are registered by drive units (24 - 30), that from these actual position value signals Cartesian coordinates of the energy source (14) are calculated using a transformation operation, and that the calculated Cartesian coordinates are compared with stored values and/or value ranges, in order to generate a signal to deactivate the system (12) and/or the energy source (14), if the transformed Cartesian coordinates depart from the value and/or value range.

5. Method according to claim 4,
**characterized in**
**that** a differential vector is calculated by subtracting a first set of Cartesian coordinates in a first sampling point from a second set of Cartesian coordinates in a second sampling point, that a Cartesian speed for the energy source (14) is determined over a time difference between the first and second sampling moment, and that a signal for the uncontrolled deactivation of the drive units and/or the energy source (14) is generated when the calculated speed falls below a preset minimum speed Vₘᵢₙ.

6. Method according to claim 1,
**characterized in**
**that** a monitoring of the speed is cyclical.

## Revendications

1. Procédé de surveillance d'un dispositif guidant une source d'énergie (14) telle qu'un appareil manipulateur (12) pour appliquer de l'énergie à une pièce (16, 18), installé avec la source d'énergie dans un volume protégé et entouré par une paroi protectrice,
la source d'énergie (14) se déplaçant à la vitesse V, on saisit cette vitesse V de la source d'énergie déplacée, comme vitesse actuelle (Vₐₖₜ),
**caractérisé en ce qu'**
on définit ou on prédéfinit une vitesse minimale (Vₘᵢₙ) en fonction de la puissance fournie par la source d'énergie (14) et/ou d'au moins un paramètre caractéristique de la paroi entourant le volume protégé,
on compare la vitesse actuelle (Vₐₖₜ) de la source d'énergie à la vitesse minimale (Vₘᵢₙ) et
en cas de dépassement vers le bas de la vitesse minimale (Vₘᵢₙ), on coupe directement ou à la fin d'un intervalle de temps de dépassement vers le bas, la source d'énergie fonctionnant pour (Vₐₖₜ > Vₘᵢₙ) à puissance constante ou à puissance pratiquement constante.

2. Procédé selon la revendication 1,
**caractérisé en ce que**
la source d'énergie (14) est une source laser ou une source de chaleur telle qu'une flamme.

3. Procédé selon la revendication 1,
**caractérisé en ce que**
l'espace de temps de dépassement vers le bas, autorisé, est réglé en fonction du ou des paramètres du procédé tels que la puissance et/ou la réalisation d'une paroi d'espace protégé.

4. Procédé selon la revendication 1,
**caractérisé en ce qu'**
on saisit les signaux de valeur réelle de position des moyens d'entraînement (24-30), à partir des signaux de valeur réelle de position, et par une opération de transformation, on calcule les coordonnées cartésiennes de la source d'énergie (14) et
on compare les coordonnées cartésiennes calculées à des valeurs mémorisées et/ou des plages de valeurs pour générer un signal pour arrêter l'installation (12) et/ou la source d'énergie (14) si les coordonnées cartésiennes transformées quittent la valeur et/ou la plage de valeurs.

5. Procédé selon la revendication 4,
**caractérisé en ce qu'**
on calcule un vecteur de différence par soustraction d'un premier jeu de coordonnées cartésiennes à un premier point de détection d'un second jeu de coordonnées cartésiennes calculées à un second point de détection,
on détermine une vitesse cartésienne de la source d'énergie (14) par la différence de temps entre le premier et le second point de détection et
on génère un signal pour l'arrêt non commandé des unités d'entraînement et/ou de la source d'énergie (14) si la vitesse calculée passe en dessous d'une vitesse minimale prédéfinie (Vₘᵢₙ).

6. Procédé selon la revendication 1,
**caractérisé en ce que**
la surveillance de la vitesse se fait de manière cyclique.
